# EUROPEAN PATENT SPECIFICATION

(11) **EP 3 149 134 B1**
(45) Date of publication and mention of the grant of the patent: **23.12.2020**
(21) Application number: 15726734.5
(22) Date of filing: 27.05.2015
(51) Int. Cl.: C11B 7/00, C11B 13/00, C11B 3/06, C10G 3/00, C10G 45/64, C10G 45/62, C10G 45/58, C10G 45/12, C10G 45/06, C10G 45/02, C11C 1/00, C11C 3/00, C11C 1/04

(54) **PROCESS FOR PRODUCING A DIESEL HYDROCARBON FRACTION STARTING FROM A RENEWABLE FEEDSTOCK**
VERFAHREN ZUR HERSTELLUNG EINER DIESELKOHLENWASSERSTOFFFRAKTION AUS EINEM ERNEUERBAREN ROHSTOFF
PROCÉDÉ DE PRODUCTION D'UNE FRACTION HYDROCARBURE DE TYPE DIESEL À PARTIR D'UNE CHARGE RENOUVELABLE

(30) Priority: 29.05.2014 IT MI20140991
(43) Date of publication of application: 05.04.2017
(73) Proprietor: ENI S.p.A., 00144 Rome (IT)
(72) Inventor: CALEMMA, Vincenzo, 20097 San Donato Milanese (mi) (IT); DE ANGELIS, Alberto Renato, 20025 Legnano (mi) (IT); ASSANELLI, Giulio, 27100 Pavia (pv) (IT)
(74) Representative: Bottero, Carlo
(86) International application number: PCT/IB2015/053977
(87) International publication number: WO 2015/181749

(56) References cited:
- EP-A1- 2 290 045
- WO-A1-2007/027669
- WO-A2-2008/103204
- WO-A2-2014/111598
- US-A1- 2013 310 613
- US-A1- 2013 310 620

## Description

The present invention relates to a process for producing a diesel hydrocarbon fraction starting from a renewable feedstock, such as, for example, a vegetable oil or a fat of an animal origin.

As is known, the increase in the extraction costs of petroleum due to the progressive exhaustion of natural reserves and a growing awareness with respect to problems relating to pollution of the environment have increased the necessity for using fuels alternative to fuels of a fossil origin, in particular fuels obtained from renewable energy sources, such as, for example, vegetable oils, fats of an animal origin, biomasses and algae.

Various processes are currently available in the specific field of fuels for diesel engines (diesel fuels), through which hydrocarbon fractions can be obtained which can be used as such as diesel fuels, or as components to be added to the diesel fuels obtained from fossil energy sources (so-called "biocomponents").

One of the technologies available for converting renewable feedstocks into diesel hydrocarbon fractions is a conversion process in two steps which comprises a first hydrotreating step of the starting feedstock followed by a subsequent hydroisomerization step.

The hydrotreating step envisages the treatment of the renewable feedstock with hydrogen in the presence of a catalyst. In this step, the feedstock is subjected to a catalytic hydrogenation reaction through which the saturation is obtained of the double bonds of the hydrocarbon chains of glycerides and the contemporaneous elimination of the oxygen atoms present on these chains. The above catalytic hydrogenation reaction, also called "hydrodeoxygenation" reaction, leads to the formation of a mixture of prevalently linear paraffins (normal-paraffins) having a length substantially corresponding to that of the hydrocarbon chains of fatty acids which form glycerides. In the hydrodeoxygenation reaction, the glycerine part of the structure of the esters of fatty acids, under the reaction conditions, is converted to propane. Further by-products are H₂O, CO₂, fuel gas and CO.

The paraffins obtained through hydrotreatment have a boiling point within the distillation temperature range of hydrocarbons which typically form diesel fuels and kerosene. These linear paraffins are a diesel fuel with poor cold flow properties. This drawback can be overcome by subjecting the linear paraffins to a subsequent hydroisomerization step, in which the paraffinic mixture is treated with hydrogen in the presence of a hydroisomerization catalyst. In this step, at least a part of the linear paraffins is converted to branched paraffins (iso-paraffins), without substantially undergoing the cracking of the alkyl chains. The mixture of branched paraffins thus obtained can be used as diesel fuel or as biocomponents for fuels of a fossil origin with adequate performances also at low temperatures.

Patent publication US 2013/310620 relates to a two-step process to produce a hydrocarbon fuel from renewable charges, whereby a feed comprising triglycerides is first hydrolyzed and the so obtained stream of fatty acids undergo a catalytic hydrotreatment in the presence of a hydrogenation catalyst supported on a neutral or basic support such as γ-allumina or titanium oxide. A fuel composition of prevalently linear hydrocarbons is obtained.

Examples of treatment processes of renewable feedstocks which include the hydrotreatment and isomerization steps described above are provided in WO 2008/058664 and US 2009/0077867.

Although the treatment process of the known art described above is successfully applied industrially, it has various disadvantages.

First of all, the above treatment process requires a high hydrogen consumption. This high hydrogen consumption is due to the inevitable hydrogenation reaction of the glycerine part of the structure of the fatty acid esters with the formation of propane and water, which takes place during the hydrotreatment step.

The transformation of the glycerine part into propane, moreover, prevents this by-product from being recovered and used as raw material for subsequent uses, for example for the production of biocomponents for diesel fuels.

A further disadvantage of the treatment process of the known art is its limited production capacity. As the hydrodeoxygenation reaction of a mixture of triglycerides is a strongly exothermic reaction, in industrial practice, the hydrotreatment step is generally effected by recirculating a part of the reaction effluent containing linear paraffins, to this step, so as to control the process temperature. In some cases, the recirculation of the paraffins can reach values higher than 80% by weight referring to the weight of the stream at the inlet of this step, according to what is described, for example, in patent EP1741768 assigned to Neste Oil Oyi. This represents an evident limit to the full utilization of the production capacity of the process.

A further disadvantage of the treatment process of the known art is linked to the maximum quantity of impurities, such as metals, chlorine and phosphorous, that can be present in the renewable feedstock. The chlorine present in the feedstock is one of the main causes of corrosion of the production plants. At present, in order to minimize problems of corrosion, the renewable feedstocks are subjected to one or more pre-treatment purification steps, which complicate the treatment process and increase the costs.

Furthermore, the above impurities (in particular, alkaline and alkaline-earth metals, and phosphorous) are among the main causes of poisoning of the catalysts used in the hydrodeoxygenation and hydroisomerization steps.

The objective of the present invention is to overcome the highlighted drawbacks of the state of the art.

In particular, a specific objective of the present invention is to provide a process for preparing a diesel hydrocarbon fraction rich in branched paraffins in a single hydrotreatment step, without resorting to an additional hydroisomerization step of linear paraffins.

A second objective of the present invention is to provide a process for preparing a diesel hydrocarbon fraction starting from a renewable feedstock which leads to a reduced hydrogen consumption.

A further objective of the present invention is to provide a process for preparing the above diesel hydrocarbon fraction which can be effected industrially with a higher productivity with respect to the refining processes of the known art.

Another objective of the present invention is to provide a process for preparing the above diesel hydrocarbon fraction in which there are reduced risks of corrosion of the production equipment.

The Applicant has now found that these and other objectives, which will be better illustrated in the following description, can be achieved by effecting a process for preparing a diesel hydrocarbon fraction according to claim 1.

According to the process of the present invention, the renewable feedstock containing glycerides, in particular triglycerides, is treated initially with water in order to cause the splitting of the glycerides into glycerine and fatty acids (phase a). The glycerine is then separated (phase b) from the fatty acids, so as to avoid being subjected to hydrogenation in the subsequent hydrotreatment step (phase c). In the hydrotreatment step, the fatty acids are transformed into a diesel hydrocarbon fraction comprising branched and linear paraffins, wherein the quantity of branched paraffins is prevalent with respect to that of the linear paraffins. As branched paraffins are obtained directly with the process according to the present invention, a subsequent hydroisomerization step can be avoided.

As the process according to the present invention comprises only one step in which hydrogen is used as reagent, and as the glycerine component of the structure of the fatty acid esters is not subject to hydrogenation, as it has been removed after the hydrolysis step, the overall hydrogen consumption is significantly reduced with respect to the two-step treatment process of the known art.

Furthermore, the introduction of a hydrolysis step of the renewable feedstock allows the glycerine to be recovered, which can be upgraded either as raw material for further uses or by purifying it to obtain a product having a higher commercial value.

As already indicated, the present invention relates to a process for preparing a diesel hydrocarbon fraction. For the purposes of the present invention, the expression "diesel hydrocarbon fraction" indicates a mixture of hydrocarbons having a total number of carbon atoms ranging from 9 to 22 and a boiling point at atmospheric pressure within the temperature range of hydrocarbons which typically form the diesel cut obtained from petroleum (180°C - 360°C), in particular the kerosene cut (C₉-C₁₄, boiling range 180°C - 240°C, so-called *jet fuel*) and the gasoil cut (C₁₄-C₂₂, boiling range 240°C - 360°C).

According to the present invention, the above diesel hydrocarbon fraction is obtained starting from a renewable feedstock.

For the purposes of the present invention, the expression "renewable feedstock" (hereinafter also indicated as "feedstock") includes feedstocks different from feedstocks deriving from petroleum.

The renewable feedstocks that can be used for the purposes of the present invention comprise glycerides. The glycerides are generally in the form of triglycerides, but monoglycerides and diglycerides can also be present.

The hydrocarbon chain of fatty acids which form glycerides can typically contain from 11 to 21 carbon atoms and can be mono-unsaturated or poly-unsaturated.

The renewable feedstocks can be selected, for example, from vegetable oils, vegetable fats, animal fats, fish oils or mixtures thereof.

Some examples of renewable feedstocks are: sunflower oil, rapeseed oil, canola oil, palm oil, soybean oil, hempseed oil, olive oil, linseed oil, peanut oil, castor oil, mustard oil, coconut oil, oils deriving from algae or fatty oils contained in the pulp of pine trees ("tall oil"). The animal oils and fats can be selected from lard, tallow, milk fat or fats obtained from the poultry industry (chicken fat). Recycled oils and fats of the food industry, of both an animal and vegetable origin, can also be used. The vegetable oils or fats can also derive from plants selected genetic manipulation. The above renewable feedstocks can be used alone or mixed with each other.

The renewable feedstocks can also contain free fatty acids. When present, the concentration of said free fatty acids can typically reach 30% by weight of the renewable feedstock. In the particular case of renewable feedstocks deriving from microalgae, the concentration of free fatty acids can also reach 60% by weight of the feedstock.

In the process according to the present invention, mixtures of renewable feedstocks together with hydrocarbons of a petroleum origin, can also be used.

Phase (a) of the process according to the present invention envisages the treatment of the renewable feedstock with water at a temperature within the range of 150-400°C and a pressure within the range of 1-20 MPa. Phase (a) is carried out without a catalyst.

Under these reaction conditions, the glycerides of the feedstock are split by hydrolysis, forming a mixture of fatty acids and glycerine. The fatty acids which are formed substantially correspond to the acids of the hydrocarbon chains of glycerides, as other reactions substantially do not take place during the hydrolysis.

The hydrolysis can be carried out in one or more reactors operating in continuous or in an autoclave.

At the end of the hydrolysis phase, the reaction mixture is treated to separate the fatty acids from the glycerine (phase b) according to separation methods known in the art. The hydrolysis reaction product is a biphasic mixture consisting of: (i) an aqueous phase (denser) in which the glycerine is dissolved, (ii) an organic phase (less dense) comprising fatty acids insoluble in water.

The separation of the aqueous phase containing glycerine can be effected, for example, by means of a continuous Florentine separator. The glycerine can then be recovered from the aqueous phase by means of distillation. It has also been observed that, at the end of the hydrolysis reaction, the aqueous phase also comprises most of the impurities possibly present in the starting renewable feedstock, in particular alkaline and alkaline-earth metals, chlorine, sulfur (substantially in the form of SO₄²⁻ions) and phosphorous (substantially in the form of PO₄³⁻ ions). Analogously to glycerine, therefore, these impurities are eliminated from the feedstock upstream of the hydrotreatment step, with a consequent reduction in corrosion phenomena of the plants caused by these substances, and also with an increase in the useful life of the catalysts.

The organic phase comprising fatty acids is fed to the subsequent catalytic hydrotreatment step (phase c), where the mixture of fatty acids is put in contact with a hydrotreatment catalyst in the presence of hydrogen.

In this step, there is the saturation of the unsaturated portions (e.g. double bonds) of the aliphatic chains of fatty acids, the removal of the oxygen atoms (deoxygenation) from the same chains and, at least partially, their isomerization, with the formation of a mixture of linear and branched paraffins, with a prevalence of the latter.

The above saturation, deoxygenation and at least partial isomerization reactions are also indicated hereunder, as a whole, with the term hydrodeoxygenation (HDO).

Although there is no intention of referring herein to any particular theory, it is believed that the reaction of phase c, which leads to the formation of the mixture of linear and branched paraffins, takes place through hydrogenation and decarboxylation reactions. It is also believed that these reactions are catalyzed by the metallic centres (hydrodeoxygenation) and by the acid sites (hydroisomerization) of the substrate of the catalytic composition.

In this respect, it is known that, unlike the processes of the known art, the hydrotreatment phase (phase c) of the process according to the present invention, is carried out on a mixture of fatty acids instead of on a mixture of triglycerides. This implies that the quantity of water formed during the hydrotreatment reaction is significantly lower with respect to the case of the hydrotreatment of triglycerides, as acids have a greater tendency to decarboxylate, forming CO₂, instead of forming H₂O.

The reduced amount of water in the reaction environment offers the advantage of allowing the use of catalytic compositions comprising metals supported on acid substrates, i.e. substrates having active sites capable of promoting the isomerization of linear paraffins to branched paraffins, therefore directly obtaining a diesel hydrocarbon fraction rich in branched paraffins. These catalytic compositions cannot normally be used in reaction environments in which high amounts of oxygenated compounds such as water are present, as these compounds tend to become firmly bound to the acid sites of the substrate, deactivating the catalyst. For this reason, in the treatment processes of renewable feedstocks of the state of the art, resort must be made to an additional hydroisomerization step.

Hydrotreatment catalysts used for the purposes of the present invention are catalytic compositions comprising one or more metals selected from group VIIIB, such as Pt, Pd, Ir and mixtures thereof supported on at least one solid acid substrate selected from: zeolite in acid form, silico-alumina, ASA (amorphous silica-alumina), SAPO, MSA (mesoporous silica-alumina), MSA-P (mesoporous silica-alumina with phosphorous) or mixtures thereof.

The metals Pd and/or Pt are preferably used. The metals are not subjected to pre-sulfidation treatment.

The metals are preferably present in an overall quantity ranging from 0.1% to 5% by weight with respect to the weight of the catalytic composition (the weight percentage of the metal refers to the content of metal expressed as metallic element).

The solid substrates used for the purposes of the present invention are: zeolite in acid form, silico-alumina, ASA (amorphous silica-alumina), SAPO, MSA (mesoporous silica-alumina), MSA-P (mesoporous silica-alumina with phosphorous) or mixtures thereof.

Zeolite in acid form refers to a zeolite containing Si and Al in the crystalline lattice, in which the cationic sites are prevalently or completely occupied by H⁺ ions.

The catalyst preferably comprises at least one zeolite in acid form as substrate, said zeolite preferably being selected from: zeolite Y, zeolite Beta, ZSM-22, ZSM-23, ZSM-5, NU-10, NU-23, ZSM-12, ZSM-35, ZSM-48, ZSM-50 and ZSM-57.

Further preferred catalysts are catalysts comprising a mixed substrate, such as, for example, Me/ZSM-22/Al₂O₃ and Me/ZSM-23/Al₂O₃, wherein Me is a metal of group VIII (e.g. Pt): in said catalysts, the alumina (Al₂O₃) does not act as carrier but as ligand.

The acid carrier preferably has a high surface area (higher than 100 m²/g).

The acid carrier has active acid sites capable of catalyzing the isomerization reaction of a linear paraffin into a branched paraffin.

In scientific literature, it is held that these acid sites are Brønsted acid sites, such as the terminal -OH groups present on the surface of a silico-alumina or an acid zeolite.

Although there is no intention of referring herein to any particular theory, it is believed that the acid sites capable of promoting the hydroisomerization of linear paraffins under the hydrotreatment conditions indicated, are acid sites capable of interacting with vapours of deuterated benzene at 303 K, creating one or more characteristic absorption bands in the IR spectrum of the substrate. These characteristic bands are generally observed within the range of 2675±10 cm⁻¹. In the case of amorphous silico-aluminas, this characteristic absorption band has a maximum around 2683 cm⁻¹. In amorphous silico-aluminas, this band is considered as being indicative of the presence of Brønsted acid sites with a strength comparable to the Brønsted sites of zeolites.

For the purposes of the present invention, suitable acid carriers preferably have acid sites showing the above characteristic absorption bands in a quantity equal to or higher than 2.0 micromoles/g.

The quantitative determination of the density of these acid sites can be effected as described in literature, for example in the article of D.G. Poduval, J. A. Rob van Vee, M. S. Rigutto, E. J. M. Hensen, Brønsted acid sites of zeolitic strength in amorphous silica-alumina, Chem. Commun., 2010, 46, 3466-68.

The quantitative determination described in the above article is based on the exchange of acid hydrogen atoms of the carrier with deuterium atoms (H/D exchange) of molecules of deuterated benzene (C₆D₆) and the subsequent IR spectroscopic analysis of characteristic absorption bands within the range of 2600 -2700 cm⁻¹.

The above determination comprises at least the following operative phases. First of all, a sample of catalyst is subjected to thermal treatment at 550°C and degassing under vacuum (residual pressure lower than or equal to 2x10⁻⁶ mbar). The sample of catalyst is then brought to a temperature of 303 K and exposed, at this temperature, to vapours of deuterated benzene (10 mbar) for 30 minutes. Due to this exposure, the deuterium atoms of the benzene exchange the hydrogen atoms of the acid sites involved, thus creating absorption bands within the spectral region of 2600-2700 cm⁻¹. At the end of the exposure, at least one IR spectrum of the catalyst is acquired. The value of the density of the active acid sites is obtained from the deconvolution of the characteristic absorption bands created in this spectral region, using the Lambert-Beer law taking into account the density (mg/cm²) of the sample.

According to a particularly preferred aspect of the present invention, in accordance with what is described in WO 2008/058664 and in WO 2008/113492, a catalyst can be used, consisting of a catalytic composition comprising:
(a) a carrier of an acid nature comprising an amorphous micro-mesoporous silico-alumina having a molar ratio SiO₂/Al₂O₃ ranging from 30 to 500, a surface area greater than 500 m²/g, a pore volume ranging from 0.3 to 1.3 ml/g, an average pore diameter less than 40 Å,
(b) a metallic component comprising one or more metals of group VIII.

Amorphous micro-mesoporous silico-aluminas that can be used as carrier (a) of the catalytic compositions of the hydrotreatment of the present invention are described, for example, in US 5049536, EP 659478, EP 812804, and called MSA. MSAs have a substantially amorphous crystallographic structure, as their XRD powder spectrum does not reveal any significant peak. US 5049536, EP 659478, EP 812804 describe various methods for preparing silico-aluminas suitable as carrier (a).

As far as the metals of the metallic component (b) of the above catalytic compositions, are concerned, these are selected from metals of group VIII.

Catalytic compositions that can be used in the hydrotreatment are described, for example, in WO2005/103207.

The hydrotreatment catalyst can be formulated and formed into extruded products having various forms (e.g. cylinders, trilobates, etc.), as described, for example, in EP 1101813.

Before use, the catalyst or catalytic composition is activated by means of a treatment in a stream of hydrogen at a temperature ranging from 250 to 350 °C.

The catalytic compositions comprising one or more metals dispersed on an acid carrier substrate are typically prepared by impregnation of the carrier with a solution containing a precursor of the metals of interest. The impregnation is then followed by a thermal treatment in an oxidizing atmosphere to decompose the precursor and obtain the metals dispersed on the surface of the substrate. Processes are also known for the production of the above supported metal catalysts by precipitation of the metal precursor from a saline solution of the same metal on a carrier, or by co-precipitation of the various components of the catalyst, i.e. the metal and the carrier.

The hydrotreatment reaction of phase (c) can be carried out in a reaction zone comprising one or more catalytic beds, in one or more reactors. According to a preferred aspect, the reaction is carried out in a fixed-bed reactor. The streams containing hydrogen and the mixture of fatty acids can be fed in equicurrent or in countercurrent. The reactor can have adiabatic catalytic beds in a number higher than or equal to two.

As this is an exothermic reaction, in every catalytic bed there is a temperature rise as the reaction proceeds. In order to control the temperature of the reaction environment, a stream of hydrogen and/or a liquid feedstock can be fed, at a defined temperature, between one catalytic bed and the next, so as to create a constant or increasing temperature profile in the reaction area. This operating mode is normally indicated as "*splitted feed*"*.*

In order to control the thermal profile in the reactor with adiabatic layers, said reactor can be run by recycling a part of the effluents leaving the same hydrotreatment step, according to the type known as recycling reactor. The function of the recycling is to dilute the fresh feedstock entering the reactor, thus limiting the thermal peaks due to the exothermic nature of the reaction.

In this respect, as already mentioned, in the process according to the present invention, the hydrotreatment reaction of phase (c) is carried out on a mixture of fatty acids with a reduced development of heat with respect to the hydrotreatment of a mixture of triglycerides. As a result of the lower quantity of heat developed, the temperature control of the reaction by the addition of a diluting feedstock becomes simpler. In particular, the process according to the present invention can be carried out by feeding a smaller quantity of diluting feedstock, with a consequent significant increase in the production yield of the process.

According to the present invention, for example, an adequate temperature control of the hydrotreatment reaction of phase (c) can be obtained by feeding a diluting feedstock equal to or lower than 30% by weight with respect to the weight of the total feedstock being fed to phase (c), wherein total feedstock refers to the sum of the diluting feedstock and mixture of fatty acids.

The diluting feedstock can advantageously be a portion of the diesel hydrocarbon fraction produced in the hydrotreatment step, more preferably the fraction of linear paraffins. The weight ratio between the recycled fraction and the mixture of fatty acids fed to step (c) is preferably within the range of 0.05 - 0.43.

According to the present invention, the hydrotreatment reaction of the fatty acids is carried out at a pressure ranging from 1 to 20 MPa, preferably ranging from 2 to 10 MPa.

The temperature at which the reaction is carried out ranges from 240°C to 450°C, preferably from 250°C to 350°C.

It is preferable to operate at a space velocity of the liquid (LHSV) ranging from 0.5 to 2 hours⁻¹, even more preferably from 0.5 to 1 hours⁻¹.

The molar ratio H₂/mixture of fatty acids preferably ranges from 5 to 30.

The product leaving the hydrotreatment reactor is an effluent which comprises a liquid portion and a gaseous portion. The liquid portion substantially comprises a mixture of linear and branched paraffins. The paraffins are prevalently branched paraffins, wherein the expression "prevalently" means that at least 50% by weight of the mixture is composed of paraffins with branched alkyl chains.

The gaseous portion comprises hydrogen, water vapour, CO₂ and fuel gas. CO and possibly small quantities of LPG can also be present.

The above gaseous and liquid portions can be separated by feeding the effluent leaving the hydrotreatment reactor to a high-pressure gas-liquid separator. The separator generally operates at a pressure ranging from 0.7 MPa to 10 MPa and at a temperature ranging from 40°C to 350°C.

The gaseous phase recovered from the separator essentially consists of hydrogen, water, CO₂ and possibly small quantities of CO and fuel gas. After separation, the gaseous phase can be cooled, in order to recover the water by condensation.

The remaining gaseous phase can be treated in order to recover the hydrogen, which can be recycled to the hydrotreatment.

The recovery of the hydrogen can be effected by means of conventional industrial methods.

CO and CO₂ can be separated by absorption in absorbing solutions: for example, the CO can be absorbed in solutions of ammonia complexes of copper, whereas the CO₂ can be absorbed in aqueous solutions of alkaline carbonates.

The liquid portion separated in the high-pressure separator substantially comprises a mixture of linear and branched paraffins with a total number of carbon atoms typically ranging from 9 to 22. A fraction of said separated liquid portion can be possibly recycled at the head to the hydrotreatment step (phase c) as diluting feedstock for controlling the temperature of the process, as described above, and increasing the average isomerization degree of the paraffins.

Depending on the operating conditions of the separator, the liquid portion can also contain small quantities of H₂O. The liquid portion can be advantageously treated with a gaseous hydrocarbon, for example CH₄, or nitrogen or hydrogen, in a stripper, in order to further reduce the water content.

The mixture of paraffins obtained from the hydrotreatment step can be used as diesel fuel or as jet fuel. As this fraction prevalently comprises branched paraffins, it is a fuel having good performances also under low temperature conditions.

The mixture obtained can be subjected to distillation to obtain said jet fuel and gasoil hydrocarbon fractions to be used as fuel or as bio-component in fuels of a petroleum origin. A naphtha fraction (C₅-C₉, boiling range 80°C - 180°C) which can be used as gasoline component, can also be recovered from the distillation.

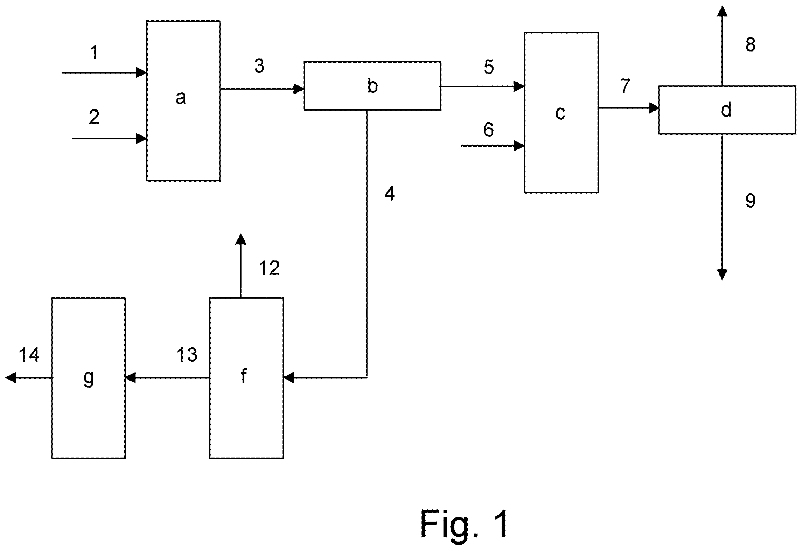

An embodiment example of the process according to the present invention is described hereunder with reference to the scheme of the enclosed Figure 1. The following example is provided for purely illustrative purposes of the present invention and should not be considered as limiting the protection scope defined by the enclosed claims.

With reference to Figure 1, the renewable feedstock is fed to the hydrolysis reactor (a) through line 1. The water necessary for the hydrolysis reaction is fed to the same reactor (a) through line 2. The mixture resulting from the hydrolysis, containing fatty acids, glycerine, water and possible impurities (metals, chlorine, phosphorous, etc.) is sent, through line 3, to a first separator (b). In said first separator (b), the organic phase containing fatty acids is separated from the aqueous phase containing glycerine and possible impurities. The aqueous phase leaving the above first separator (b) is fed, through line 4, to a second separator (f), for example a distillation column, where the glycerine is recovered, through line 13, and the remaining water containing possible impurities, through line 12. If necessary, before being subjected to distillation, the glycerine-water mixture can be pre-treated on exchange resins in order to reduce the content of salts present.

The glycerine leaving the second separator (f), through line 13, is fed to a subsequent reaction area (g) where it is used as raw material for producing biocomponents for diesel fuels (line 14), for example through the process described in patent application WO 2013150457.

The organic phase containing fatty acids leaving the first separator (b) is fed, through line 5, to a catalytic hydrotreatment reactor (c), where it is reacted with a stream of hydrogen which is fed to the same reactor (c), through line 6. The mixture leaving the catalytic hydrotreatment reactor (c), is sent to a high-pressure gas-liquid separator (d), through line 7. The gaseous phase comprising hydrogen, water vapour, CO₂ and possibly CO, is recovered at the outlet of the separator (d), through line 8, whereas the liquid phase containing paraffins is recovered, through line 9.

### EXAMPLE 1 - Hydrolysis of palm oil

19.64 g of a renewable feedstock consisting of palm oil and 40.11 g of water are charged into a steel autoclave. The autoclave is then heated up to 285°C. At this temperature, the autoclave reaches an autogenous pressure of 6.6 MPa.

The reaction mixture is kept under stirring at this temperature for a period of 3 hours. The autoclave is then cooled to 40°C.

The reaction product is a biphasic mixture, consisting of an upper organic phase and a lower aqueous phase. The upper organic phase is composed of (% moles): palmitic acid 44%, oleic acid 39%, linoleic acid 10%, stearic acid 4%, non-converted palm oil 2%, glycerol 1%. The underlying aqueous phase substantially comprises water and glycerine.

The conversion of the palm oil is equal to 98%. The selectivity to the desired products is complete.

The starting palm oil contained impurities of chloride ions, calcium ions, sodium ions and sulfate ions. A quantitative analysis of the aqueous phase shows that the impurities are distributed in this phase in the following weight percentages (referring to the weight of the corresponding impurity in the starting oil)
- chloride ions 100%
- calcium ions 73%,
- sodium ions 82%,
- sulfate ions 75%

### EXAMPLE 2 - Hydrolysis of castor oil

20.13 g of castor oil and 40.37 g of water are charged into a steel autoclave. The autoclave is then heated up to 285°C. At this temperature, the autoclave reaches an autogenous pressure of 6.6 MPa.

The reaction mixture is kept under stirring at this temperature for a period of 3 hours. The autoclave is then cooled to 40°C. The reaction product is a biphasic mixture, consisting of an upper organic phase and a lower aqueous phase.

The upper organic phase is composed of (% moles): ricinoleic acid 89%, oleic acid 5%, linoleic acid 3%, palmitic acid 1%, non-converted castor oil 1%, glycerol 1%. The underlying aqueous phase substantially comprises water and glycerine.

The conversion of the castor oil is equal to 99%. The selectivity to the desired products is complete.

### EXAMPLE 3 - Hydrolysis of sunflower oil

19.37 g of sunflower oil and 40.02 g of water are charged into a steel autoclave. The autoclave is then heated up to 285°C. At this temperature, the autoclave reaches an autogenous pressure of 6.6 MPa.

The mixture is kept under stirring at this temperature for a period of 3 hours. The autoclave is then cooled to 40°C.

The reaction product is a biphasic mixture, consisting of an upper organic phase and a lower aqueous phase. The upper organic phase is composed of (% moles): linoleic acid 69%, oleic acid 20%, palmitic acid 7%, stearic acid 2%, non-converted sunflower oil 1%, glycerol 1%. The underlying aqueous phase substantially comprises water and glycerine.

The conversion of the sunflower oil is equal to 99%. The selectivity to the desired products is complete.

### EXAMPLE 4 - Hydrolysis of grapeseed oil

19.24 g of grapeseed oil and 40.15 g of water are charged into a steel autoclave. The autoclave is then heated up to 285°C. At this temperature, the autoclave reaches an autogenous pressure of 6.6 MPa.

The mixture is kept under stirring at this temperature for a period of 3 hours. The autoclave is then cooled to 40°C.

The reaction product is a biphasic mixture, consisting of an upper organic phase and a lower aqueous phase. The upper organic phase is composed of (% moles) : linoleic acid 71%, oleic acid 16%, palmitic acid 8%, stearic acid 3%, non-converted grapeseed oil 1%, glycerol 1%. The underlying aqueous phase substantially comprises water and glycerine.

The conversion of the grapeseed oil is equal to 99%. The selectivity to the desired products is complete.

### EXAMPLE 5 - Hydrotreatment of a mixture of fatty acids with the direct formation of a mixture of iso- and normal-paraffins

The organic phase, consisting of the mixture of fatty acids obtained according to what is described in Example 1, was subjected to hydrotreatment on a Pt catalyst dispersed on amorphous silico-alumina in the presence of hydrogen. The content of Pt was equal to 0.6% by weight with respect to the weight of the catalyst. The amorphous silico-alumina was prepared according to what is described in patent application EP 1101813 A1 (*"preparative example 2"*).

The hydrotreatment reaction was carried out in a fixed-bed reactor, at a pressure of 7 MPa, with a space velocity of the liquid (LHSV) equal to 1 h⁻¹ and at a temperature of 330°C.

A flow of n-dodecane was fed to the reactor together with the mixture of fatty acids, in order to simulate the recirculation conditions of a fraction of paraffins which can be obtained from the reaction. The feedstock fed to the reactor contained 30% by weight of n-dodecane and 70% by weight of fatty acids.

The volumetric feeding ratio between hydrogen and feedstock fed, was equal to 1,000 Nl H₂/l of feedstock fed.

The reaction products were removed and analyzed by means of gas chromatography. A complete conversion of the mixture of fatty acids was revealed by the gas chromatographic analysis.

Table 1 below indicates the following selectivity values:
- selectivity of the paraffins obtained from the hydrotreatment reaction in relation to the reaction time; the selectivities are expressed as molar percentage of the sum of paraffins having a number of carbon atoms equal to or higher than 13 (C₁₃₊) referring to the number of total moles of fatty acids present in the feedstock fed to the reactor (excluding n-dodecane);
- molar selectivity of the water and sum of CO₂ and CO in relation to the reaction time. The selectivities are expressed as molar percentages of "H₂O" and "CO₂ + CO" referring to number of total oxygen moles present in the feedstock fed to the reactor (excluding n-dodecane).
- iso-/normal-paraffin ratio, defined as percentage weight ratio between the total weight of iso-paraffins having from 15 to 18 carbon atoms (C₁₅ - C₁₈) and the total weight of iso- and normal-paraffins having from 15, 16, 17 and 18 carbon atoms.

**Table 1**

| Time (h) | Selectivity C₁₃+ (mol%) | Selectivity H₂O (mol%) | Selectivity CO + CO₂ (mol%) | Ratio iso/normal paraffins |
|---|---|---|---|---|
| 10 | 81.2 | 59.3 | 40.7 | 70.3 |
| 25 | 83.7 | 61.2 | 38.8 | 69.8 |
| 51 | 80.4 | 57.9 | 42.1 | 67.7 |
| 103 | 84.7 | 60.8 | 39.2 | 70.1 |

The values of the iso/normal paraffin ratio indicate that the hydrotreatment reaction leads to the formation of a mixture of linear and branched paraffins prevalently containing branched paraffins.

## Claims

1. A process for preparing a diesel hydrocarbon fraction which comprises the following phases:
(a) reacting at least a renewable feedstock comprising glycerides with water at a temperature within the range of 150-400°C and a pressure within the range of 1-20 MPa, forming at least a biphasic mixture consisting of an aqueous phase containing glycerine and an organic phase comprising a mixture of water insoluble fatty acids;
(b) separating said glycerine from said mixture of fatty acids;
(c) subjecting said mixture of fatty acids to catalytic hydrotreatment in the presence of hydrogen, obtaining a reaction product comprising:
(i) at least one gaseous effluent comprising hydrogen, water vapour and CO₂ and possibly CO,
(ii) at least one diesel hydrocarbon fraction comprising branched paraffins in a prevalent quantity with respect to the linear paraffins, said catalytic hydrotreatment being carried out at a temperature within the range of 240-450°C and a pressure within the range of 1-20 MPa in the presence of a catalytic composition comprising at least one metal of group VIIIB dispersed on at least one acid carrier for catalyzing a hydroisomerization reaction of linear paraffins to branched paraffins, wherein said at least one acid carrier is selected from: zeolite in acid form, silico-alumina, ASA, SAPO, MSA, MSA-P or mixtures thereof;
(d) separating said diesel hydrocarbon fraction from said reaction product.

2. The process according to claim 1, wherein said at least one metal is selected from Pt, Pd, Ir and mixtures thereof.

3. The process according to any of the previous claims, wherein said diesel hydrocarbon fraction separated in said separation phase (d) is partly recycled to said phase (c).

4. The process according to the previous claim, wherein said diesel hydrocarbon fraction is recycled in a weight ratio within the range of 0.05 - 0.43 with respect to the weight of the mixture of fatty acids fed to phase (c).

5. The process according to any of the previous claims, wherein said hydrogen is separated from said gaseous effluent and partly recycled to said hydrotreatment phase (c).

6. The process according to any of the previous claims, wherein said glycerine is used as raw material for producing biocomponents for fuels.

## Patentansprüche

1. Verfahren zur Herstellung einer Diesel-Kohlenwasserstoff-Fraktion, welches die folgenden Phasen umfasst:
(a) Umsetzung mindestens einer erneuerbaren Einspeisung, umfassend Glyceride, mit Wasser bei einer Temperatur innerhalb des Bereichs von 150-400°C und einem Druck innerhalb des Bereichs von 1-20 MPa, Bilden mindestens einer zweiphasigen Mischung, bestehend aus einer wässrigen Phase, enthaltend Glycerin, und einer organischen Phase, umfassend eine Mischung aus in Wasser unlöslichen Fettsäuren;
(b) Trennung des Glycerins von der Mischung der Fettsäuren;
(c) Unterwerfen der Mischung der Fettsäuren einer katalytischen Hydrobehandlung in Gegenwart von Wasserstoff, wobei ein Reaktionsprodukt erhalten wird, umfassend:
(i) mindestens einen gasförmigen Abstrom, umfassend Wasserstoff, Wasserdampf und CO₂, und gegebenenfalls CO,
(ii) mindestens eine Diesel-Kohlenwasserstoff-Fraktion, umfassend verzweigte Paraffine in einer überwiegenden Menge, bezogen auf die linearen Paraffine, wobei die katalytische Hydrobehandlung bei einer Temperatur durchgeführt wird innerhalb des Bereichs von 240-450°C und einem Druck innerhalb des Bereichs von 1-20 MPa in Gegenwart einer katalytischen Zusammensetzung, umfassend mindestens ein Metall der Gruppe VIIIB, dispergiert auf mindestens einem sauren Träger zur Katalysierung einer Hydroisomerisierungsreaktion von linearen Paraffinen zu verzweigten Paraffinen, wobei der mindestens eine saure Träger ausgewählt ist aus: Zeolith in Säureform, Silico-Alumina, ASA, SAPO, MSA, MSA-P oder Mischungen davon;
(d) Trennung der Diesel-Kohlenwasserstoff-Fraktion von dem Reaktionsprodukt.

2. Verfahren nach Anspruch 1, wobei das mindestens eine Metall ausgewählt ist aus Pt, Pd, Ir und Mischungen davon.

3. Verfahren nach irgendeinem der vorhergehenden Ansprüche, wobei die in der Abtrennphase (d) abgetrennte Diesel-Kohlenwasserstoff-Fraktion teilweise zu der Phase (c) rezykliert wird.

4. Verfahren nach vorhergehenden Anspruch, wobei die Diesel-Kohlenwasserstoff-Fraktion in einem Gewichtsverhältnis innerhalb des Bereichs von 0,05-0,43, bezogen auf das Gewicht der Mischung, die Phase (c) zugeführt wird, rezykliert wird.

5. Verfahren nach irgendeinem der vorhergehenden Ansprüche, wobei Wasserstoff von dem gasförmigen Abstrom abgetrennt wird und teilweise in die Hydrobehandlungsphase (c) rezykliert wird.

6. Verfahren nach irgendeinem der vorhergehenden Ansprüche, wobei das Glycerin als Rohmaterial zur Herstellung von Biokomponenten von Brennstoffen verwendet wird.

## Revendications

1. Procédé de préparation d'une fraction d'hydrocarbure diesel qui comprend les phases suivantes :
(a) la réaction d'au moins une charge d'alimentation renouvelable comprenant des glycérides avec de l'eau à une température dans la plage de 150 à 400 °C et à une pression dans la plage de 1 à 20 MPa, pour former au moins un mélange biphasique constitué d'une phase aqueuse contenant de la glycérine et d'une phase organique comprenant un mélange d'acides gras insolubles dans l'eau ;
(b) la séparation de ladite glycérine dudit mélange d'acides gras ;
(c) la soumission dudit mélange d'acides gras à un hydrotraitement catalytique en présence d'hydrogène, pour obtenir un produit de réaction comprenant :
(i) au moins un effluent gazeux comprenant de l'hydrogène, de la vapeur d'eau et du CO₂ et éventuellement du CO,
(ii) au moins une fraction d'hydrocarbure diesel comprenant des paraffines ramifiées en une quantité prédominante par rapport aux paraffines linéaires, ledit hydrotraitement catalytique étant mis en œuvre à une température dans la plage de 240 à 450 °C et une pression dans la plage de 1 à 20 MPa en présence d'une composition catalytique comprenant au moins un métal du groupe VIIIB dispersé sur au moins un support acide pour catalyser une réaction d'hydroisomérisation de paraffines linéaires en paraffines ramifiées, dans lequel ledit au moins un support acide est sélectionné parmi : zéolite sous forme acide, silico-alumine, ASA, SAPO, MSA, MSA-P ou des mélanges de ceux-ci ;
(d) la séparation de ladite fraction d'hydrocarbure diesel dudit produit de réaction.

2. Procédé selon la revendication 1, dans lequel ledit au moins un métal est sélectionné parmi Pt, Pd, Ir et des mélanges de ceux-ci.

3. Procédé selon l'une quelconque des revendications précédentes, dans lequel ladite fraction d'hydrocarbure diesel séparée dans ladite phase (d) de séparation est partiellement recyclée vers ladite phase (c).

4. Procédé selon la revendication précédente, dans lequel ladite fraction d'hydrocarbure diesel est recyclée dans un rapport pondéral dans la plage de 0,05 à 0,43 par rapport au poids du mélange d'acides gras introduit dans la phase (c).

5. Procédé selon l'une quelconque des revendications précédentes, dans lequel ledit hydrogène est séparé dudit effluent gazeux et partiellement recyclé vers ladite phase (c) d'hydrotraitement.

6. Procédé selon l'une quelconque des revendications précédentes, dans lequel ladite glycérine est utilisée comme matière première pour produire des biocomposants pour carburants.
